(19) Europäisches Patentamt
European Patent Office
Office européen des brevets

(11) Veröffentlichungsnummer : **0 185 237**
**B1**

(12) # EUROPÄISCHE PATENTSCHRIFT

(45) Veröffentlichungstag der Patentschrift : **28.09.88**

(51) Int. Cl.⁴ : **C 08 L 81/06**, C 08 L 77/00

(21) Anmeldenummer : **85115207.4**

(22) Anmeldetag : **30.11.85**

(54) **Thermoplastiche Formmassen.**

(30) Priorität : **05.12.84 DE 3444339**

(43) Veröffentlichungstag der Anmeldung : **25.06.86 Patentblatt 86/26**

(45) Bekanntmachung des Hinweises auf die Patenterteilung : **28.09.88 Patentblatt 88/39**

(84) Benannte Vertragsstaaten : **BE DE FR GB IT NL**

(56) Entgegenhaltungen :
**US-A- 3 729 527**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Hub, Hans-Henning, Dr.**
**Herrnsheimer Hauptstrasse 127a**
**D-6520 Worms 24 (DE)**
Erfinder : **Blinne, Gerd, Dr.**
**Im Woogtal 7**
**D-6719 Bobenheim (DE)**
Erfinder : **Reimann, Horst, Dr.**
**Adelheidstrasse 26**
**D-6520 Worms 1 (DE)**
Erfinder : **Neumann, Peter, Dr.**
**Franz-Schubert-Strasse 1**
**D-6908 Wiesloch (DE)**
Erfinder : **Schaefer, Gerhard, Dr.**
**Schafrippel 2**
**D-6900 Heidelberg (DE)**

**EP 0 185 237 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Aus der DE-OS 21 22 735 sind thermoplastische Formmassen aus Polyamiden und Polyarylethersulfonen bekannt. Solche Formmassen sollen sich durch besseres Fließverhalten, höhere Härte, verbesserte Schlagzähigkeit und Knickfestigkeit auszeichnen. Insgesamt befriedigen jedoch die mechanischen Eigenschaften noch nicht. Insbesondere läßt die Anfälligkeit gegenüber Spannungsrißkorrosion zu wünschen übrig. Entsprechend der US-PS 3 655 822 werden Polyarylethersulfone mit Polycaprolactamblöcken in der Kette modifiziert. Eine solche Modifizierung ist jedoch technisch sehr aufwendig, da bei der alkalischen Polymerisation von Caprolactam strenge Anforderungen hinsichtlich des Wassergehalts der Ausgangsverbindungen gefordert wird.

Es war deshalb die technische Aufgabe gestellt, thermoplastische Formmassen aus Polyamiden und Polyarylethersulfonen durch einfaches Mischen zur Verfügung zu stellen, die sich durch gute mechanische Eigenschaften hinsichtlich Schlagzähigkeit, Biegefestigkeit, Reißfestigkeit und Elastizitätsmodul auszeichnen und darüber hinaus eine gute Lösungsmittelbeständigkeit und geringe Anfälligkeit gegenüber Spannungsrißkorrosion aufweisen.

Diese Aufgabe wird gelöst durch thermoplastische Formmassen, enthaltend mindestens ein thermoplastisches Polyamid und mindestens ein Polyarylethersulfon mit sauren Gruppen.

Die neuen Formmassen haben den Vorteil, daß sie durch Mischen der Ausgangskomponenten einfach in vielen Variationen herstellbar sind. Ferner haben die neuen Formmassen den Vorteil, daß sie sich durch gute mechanische Eigenschaften, wie Schlagzähigkeit und darüber hinaus durch gute Lösungsmittelbeständigkeit und geringe Anfälligkeit gegenüber Spannungsrißkorrosion auszeichnen.

Die neuen Formmassen sind insofern bemerkenswert, als entsprechend der US-PS 3 655 822 einfache Mischungen aus Polyarylethersulfonen und Polyamiden als unbefriedigend hinsichtlich ihrer Eigenschaften ausgewiesen werden.

Polyamide (Komponente A) im Sinne der Erfindung sind an sich bekannt thermoplastische lineare Polyamide, die vorteilhaft eine relative Viskosität von 1,5 bis 5,0 (1 %, $H_2SO_4$, 23 °C) haben. Geeignete Polyamide leiten sich von Lactamen mit 7 bis 13 Ringgliedern ab. Geeignete durch Polymerisation von Lactamen erhältliche Polyamide sind beispielsweise Polycapro Bk/P lactam, Polycaprylactam oder Polylauryllactam. Weiterhin sind geeignete Kondensate aus Poly-11-aminoundecansäure. Andere geeignete Polyamide erhält man durch Kondensation äquimolarer Mengen einer gesättigten Dicarbonsäure mit 4 bis 12 Kohlenstoffatomen mit einem Diamin mit 4 bis 14 Kohlenstoffatomen. Besonders bevorzugt sind Kondensate aus $\alpha,\Omega$-Alkandicarbonsäuren mit 6 bis 12 Kohlenstoffatomen mit einem $\alpha,\Omega$-Alkandiamin mit 6 bis 10 Kohlenstoffatomen. Beispielhaft seien genannt Polyhexamethylenadipinsäureamid, Polyhexamethylenacelainsäureamid, Polyhexamethylensebacinsäureamid, Polyhexamethylendodecandisäureamid. Geeignete Dicarbonsäuren sind auch Isophthalsäure und Terephthalsäure, die mit den oben genannten Diaminen kondensiert werden. Darüber hinaus sind auch Copolyamide, die durch Kondensation der oben genannten Ausgangsstoffe erhältlich sind, geeignet.

Bevorzugte Polyamide sind Polycaprolactam, Polylauryllactam, Polyhexamethylenadipinsäureamid, Polyhexamethylensebacinsäureamid, Polyhexamethylenisophthalamid, Polyhexamethylentherephthalamid, Polyhexamethylenisophthalamid und Polyhexamethylenterephthalamid sowie deren Gemische und Copolyamide.

Besondere technische Bedeutung haben erlangt Polycaprolactam, Polyhexamethylenadipinsäureamid, Polyhexamethylensebacinsäureamid sowie Polyamide aufgebaut aus Terephthalsäure- und Isophthalsäureresten sowie Hexamethylendiamin.

Der Gehalt an Polyamiden in den erfindungsgemäßen Formmassen beträgt 5 bis 65 Gew.-%, insbesondere 5 bis 50 Gew.-%.

Die erfindungsgemäße Formmasse enthält als Komponente B mindestens 1 Polyarylethersulfon mit sauren Gruppen in einer Menge von bis 1 bis 95 Gew.-%, insbesondere von 5 bis 90 Gew.-%. Geeignete saure Gruppen sind beispielsweise Sulfonsäuregruppen, Carboxylgruppen oder Phosphonsäuregruppen. Bevorzugt enthalten die Polyarylethersulfone Sulfonsäure oder Carboxylgruppen. Die sauren Gruppen können statistisch oder sequenziert über die Polymerkette verteilt sein. Die sauren Gruppen können direkt oder über einen Alkylenrest mit bis zu 8 Kohlenstoffatomen an die Polymerkette, z. B. an den Arylenrest oder ein Zwischenglied gebunden sein. Vorteilhaft enthalten die sauren Gruppen enthaltenden Polyarylethersulfone, insbesondere Sulfonsäure und/oder Carboxylgruppen, in einer Menge von 0,01 bis 5, insbesondere 0,01 bis 1 m Äquivalent/g Polymer. Die verwendeten Polyarylethersulfone haben in der Regel einen Polykondensationsgrad von 10 bis 250, insbesondere von 20 bis 150. Ferner haben die bevorzugten Polyarylethersulfone mit sauren Gruppen eine relative Viskosität von 1,1 bis 1,6 (0,5 %, NMP, 25 °C). Die Glastemperatur dieser Polyarylethersulfone liegt vorteilhaft oberhalb 130 °C.

Die sauren Gruppen enthaltenden Polyarylethersulfone leiten sich vorteilhaft ab von Polyarylethersulfonen, die aufgebaut sind aus Einheiten der Formel

$$—E_1—O—E_2—O— \quad (I)$$

in der $E_1$ sich von Dihalogenbenzolverbindungen ableitet, wie 4,4'-Dichlordiphenylsulfon, 1,4-Di(4-chlorphenylsulfonyl) benzol, 4,4'-Di-(4-chlorphenyl) diphenylether oder 4,4'-Di-(4-chlorphenylsulfonyl) diphenyl. $E_2$ leitet sich ab von Diphenolen, wie Hydrochinon, Resorcin, 4,4'-Dihydroxydiphenyl, 4,4'-Dihydroxydiphenylsulfon, 4,4'-Dihydroxybenzophenon, 2,2-Di-(4-hydroxyphenyl) propan und 4,4'-Dihydroxydiphenylether.

Bevorzugte Polyarylethersulfone der Formel I sind aufgebaut aus Einheiten, die sich von
a) 4,4'-Dichlordiphenylsulfon und 4,4'-Dihydroxydiphenylsulfon oder
b) 4,4'-Dichlordiphenylsulfon und 2,2-Di-(4-hydroxyphenyl) propan ableiten.

Polyarylethersulfone der Formel I werden aus den oben aufgeführten Dihalogenbenzolverbindungen und Diphenolen durch Umsetzen unter Mitverwendung von Alkali oder Alkalicarbonaten in aprotischen Lösungsmitteln hergestellt. Geeignete Verfahren werden beispielsweise beschrieben in den US-Patentschriften 3 365 517, 3 432 468, der GB-PS 1 153 035 sowie der DE-OS 27 31 816.

Die sauren Gruppen, wie Sulfonsäure oder Carboxylgruppen werden in die Polyarylethersulfone der Formel I, z. B. durch polymeranalogue Umsetzung eingeführt. Beispielsweise wird ein Polyarylsulfon mit Schwefeltrioxid in einem geeigneten Lösungsmittel, wie Triethylphosphat sulfoniert. Ein geeignetes Verfahren ist beispielsweise beschrieben in der EP-PS 8894. Carboxylgruppen werden beispielsweise eingeführt durch Umsetzen von Polymeren der Formel I mit Carbonsäureanhydriden, wie Bernsteinsäureanhydrid unter Mitverwendung von Aluminiumchlorid in geeigneten Lösungsmitteln und anschließendes Hydrieren der Ketogruppe.

Nach einen anderen bevorzugten Arbeitsweise gelangt man zu Säuregruppen enthaltenden Polyarylethersulfonen, indem man einen Teil z. B. 0,2 bis 100 Mol-% der oben aufgeführten Dihalogenbenzolverbindungen und/oder Bisphenole durch Sulfonsäure und/oder Carboxylgruppen enthaltende Dihalogenbenzolverbindungen und/oder Bisphenole ersetzt.

Geeignete Sulfonsäure und/oder Carboxylgruppen enthaltende Dihalogenbenzolverbindungen sind solche der Formel II

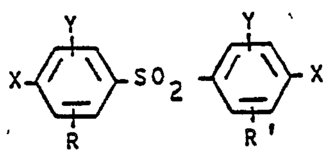

(II)

In der Formel II bezeichnen
X jeweils ein Halogenatom, vorzugsweise ein Fluor- oder Chloratom
R einen Rest der Formel $-(CH_2)_mCOOH$ oder $-(CH_2)_mSO_3H$, wobei m für 0, 1 oder 2, vorzugsweise 0 steht
$R^1$ ein Wasserstoffatom oder die Reste $-(CH_2)_mCOOH$ oder $-(CH_2)_mSO_3H$, wobei m für 0, 1 oder 2, vorzugsweise für 0 steht und
Y ein Wasserstoffatom oder einen $C_1$- bis $C_4$-Alkylrest.

Bevorzugte Verbindungen der Formel II sind :
4,4'-Difluordiphenylsulfon-3-sulfonsäure,
4,4'-Difluordiphenylsulfon-3,3'-disulfonsäure,
4,4'-Dichlordiphenylsulfon-3-sulfonsäure,
4,4'-Dichlordiphenylsulfon-3,3'-disulfonsäure und deren Mischungen, sowie
4,4'-Difluordiphenylsulfon-3-carbonsäure,
4,4'-Difluordiphenylsulfon-3,3'-dicarbonsäure,
4,4'-Dichlordiphenylsulfon-3-carbonsäure,
4,4'-Dichlordiphenylsulfon-3,3'-dicarbonsäure sowie deren Mischungen.

Besonders bevorzugt sind die genannten Derivate des 4,4'-Dichlordiphenylsulfons.

Geeignete Carboxyl- oder Sulfonsäuregruppen enthaltende Bisphenole sind solche der Formeln III, IV und V

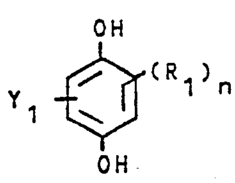

(III)

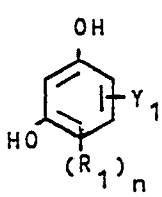

(IV)

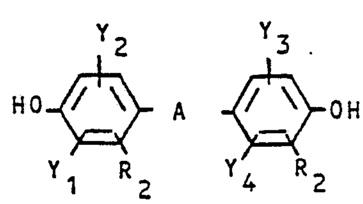

(V)

In den Formeln III, IV und V bezeichnen jeweils
$Y_1$, $Y_2$, $Y_3$, $Y_4$ ein Wasserstoffatom oder einen $C_1$- bis $C_4$-Alkylrest
$R^1$ einen Rest $-(CH_2)_m-COOH$ oder $-(CH_2)_m-SO_3H$, wobei m für Null oder eine ganze Zahl von 1

bis 6, vorzugsweise für Null steht,

$R^2$ ein Wasserstoffatom oder einen der Reste $-(CH_2)_m-COOH$ oder $-(CH_2)_m-SO_3H$, wobei m für Null oder eine ganze Zahl von 1 bis 6, vorzugsweise für Null steht und

n die Zahl 1 oder 2, vorzugsweise 1.

In der Formel V bezeichnet A eine chemische Bindung, ein Sauerstoff-, ein Schwefelatom, eine Sulfoxid- oder eine Sulfongruppe oder einen Rest der Formel

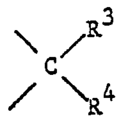

(VI)

wobei in dem Rest der Formel VI $R^3$ und $R^4$ gleich oder verschieden sein können und jeweils für ein Wasserstoffatom, einen $C_1$- bis $C_4$-Alkylrest oder einen Phenyl-, Benzyl- oder Phenylethylrest, der gegebenenfalls durch eine Methyl-, Trifluormethylgruppe oder ein Halogenatom substituiert sein kann, einen Rest $-(CH_2)_m-COOH$ oder $-(CH_2)_m-SO_3H$ stehen, wobei m Null oder eine ganze Zahl von 1 bis 6 bedeutet, stehen. Wenn $R^3$ und $R^4$ keine $-COOH-$ oder $-SO_3H$-Gruppen enthalten, muß wenigstens einer der Reste $R^2$ in Formel V eine Carboxyl- oder Sulfonsäuregruppe tragen.

Besonders bevorzugt sind Bisphenole der Formel V, in der $R^2$ ein Wasserstoffatom bezeichnet, $Y_1$ bis $Y_4$ gleich oder verschieden sein können und ein Wasserstoffatom oder einen $C_1$- bis $C_4$-Alkylrest bedeuten, und A für den Rest $> CR^3R^4$ steht, in dem $R^3$ ein Wasserstoffatom, einen $C_1$- bis $C_4$-Alkylrest oder die Gruppe $-(CH_2)_mCOOH$ oder $-(CH_2)_mSO_3H$, wobei m für eine ganze Zahl von 0 bis 6 steht und $R^4$ die Gruppe $-(CH_2)_mCOOH$ oder $-(CH_2)_mSO_3H$, wobei m für eine ganze Zahl von 0 bis 6 steht, bezeichnet.

Geeignete Verbindungen der Formel III, IV und V sind beispielsweise

2,4-Dihydroxybenzoesäure,
2,5-Dihydroxybenzoesäure,
2,6-Dihydroxybenzoesäure,
3,5-Dihydroxybenzoesäure,
2,4-Dihydroxy-6-methylbenzoesäure,
2,5-Dihydroxybenzol-1,3-dicarbonsäure,
2,4-Dihydroxyphenylessigsäure,
2,5-Dihydroxyphenylessigsäure,
2,4-Dihydroxyzimtsäure,
2,4-Dihydroxydihydrozimtsäure,
2,4-Dihydroxybenzolsulfonsäure,
3,5-Dihydroxybenzolsulfonsäure,
2,4-Dihydroxybenzol-1,5-disulfonsäure,
2,5-Dihydroxybenzolsulfonsäure,
2,5-Dihydroxybenzol-1,4-disulfonsäure.

Bevorzugte Formmassen enthalten als Komponente C 0 bis 94 Gew.-%, insbesondere 4 bis 90 Gew.-% eines Polyarylethersulfons. Geeignete Polyarylethersulfone sind aufgebaut aus Einheiten der Formel I und leiten sich, wie dort angegeben, von Diphenolen und Dihalogenbenzolen ab. Die bevorzugten Polyethersulfone sind aufgebaut aus Einheiten, die sich von 4,4'-Dichlordiphenylsulfon und 4,4'-Dihydroxydiphenylsulfon oder 4,4'-Dichlordiphenylsulfon und 2,2-Di-(4-hydroxyphenyl) propan ableiten. Es versteht sich, daß die Polyarylethersulfone der Komponente C keine sauren Gruppen enthalten. Der Polymerisationsgrad n beträgt vorteilhaft 10 bis 250, insbesondere 20 bis 150. Ferner haben die bevorzugten Polyarylethersulfone eine relative Viskosität von 1,2 bis 1,6 (0,5 %, N-Methylpyrrolidon, 25 °C).

Die Summe der Gewichtsprozente der Komponenten A, B und C ergänzen sich jeweils auf 100.

Die erfindungsgemäßen Formmassen können noch übliche Zusatzstoffe und Hilfsmittel (Komponente D) enthalten. Geeignete Zusatzstoffe oder Hilfsmittel sind UV-Stabilisatoren, Stabilisatoren gegen Hitze und Hydrolyse-einwirkung, Schmier-, Gleit- und Trennmittel, Farbpigmente, die vorteilhaft in einer Menge von 0,01 bis 5 Gew.-% enthalten sind und Flammschutzmittel in einer Menge bis 25 Gew.-%. Geeignete Zusatzstoffe sind beispielsweise auch Füllstoffe wie Wollastonit, Kaolin, Glasfasern oder Glaskugeln, die vorteilhaft in einer Menge von 5 bis 50 Gew.-%, bezogen auf die thermoplastische Formmasse, angewandt werden.

Die Herstellung der erfindungsgemäßen Formmassen erfolgt in der Regel auf einschlägig bekannten Vorrichtungen zur Herstellung von Thermoplastmischungen wie Einwellen- oder Zweiwellenextrudern oder Schneckenknetern. Die Ausgangsstoffe Polyamid und Polyarylethersulfon mit und ohne saure Gruppen werden gemischt oder einzeln im schmelzflüssigen Zustand, z. B. bei Temperaturen von 230 bis 380 °C gemischt. Gegebenenfalls werden auch die erwähnten Hilfsstoffe zugefügt.

Erfindungsgemäße Formmassen eignen sich zur Herstellung von Formkörpern durch Spritzgießen oder Extrusion.

Erfindungsgemäße Formmassen seien an folgenden Beispielen veranschaulicht. Die nachfolgend angegebenen Teile sind Gewichtsteile.

Vergleichsbeispiel 1

60 Teile Polyarylethersulfon, aus Einheiten, die sich von 4,4'-Dichlordiphenylsulfon und 2,2-Di-(4-hydroxyphenyl) propan ableiten und 40 Teile eines Polyamids, aufgebaut aus Hexamethylendiamin, Terephthalsäure und Isophthalsäure wurden bei einer Temperatur von 290 °C in einem Doppelschneckenextruder in der Schmelze gemischt, gestrangt und granuliert. Die so erhaltene Formmasse wurde zu Formkörpern spritzgegossen. Die Eigenschaften sind aus nachfolgender Tabelle I zu entnehmen.

Beispiel 1

Bei einer Temperatur von 290 °C wurde ein Gemisch aus 50 Teilen Polyarylethersulfon, aufgebaut aus Einheiten, die sich von 4,4'-Dichlordiphenylsulfon und 2,2-Di-(4-hydroxyphenyl) propan ableiten und 40 Teilen eines Polyamids, aufgebaut aus Hexamethylendiamin, Terephthalsäure und Isophthalsäure, sowie 10 Teilen eines Polyarylethersulfons, aufgebaut aus Einheiten, die sich von 4,4'-Dichlordiphenylsulfon, 2,2-Di-(4-Hydroxyphenyl) propan und 2,2(3-Sulfonato-4-Hydroxyphenyl)-2-(4-Hydroxyphenyl) propan ableiten, mit einem Gehalt an Sulfonsäuregruppen und einer Säurezahl von 0,05 m Äquivalent/g Polymer mittels eines Doppelschneckenextruders in der Schmelze gemischt, gestrangt und granuliert. Die erhaltene Formmasse wurde zu Formkörpern spritzgegossen. Die Eigenschaften sind aus nachfolgender Tabelle I zu entnehmen.

Tabelle I

| | Vergleichsbeispiel 1 | Beispiel 1 |
|---|---|---|
| Wärmeformbeständigkeit Vicat (°C) bei 49,05 N DIN 53 460 | 130 | 172 |
| Kerbschlagzähigkeit ($kJ/m^2$) DIN 53 453 | 5.9 | 8.0 |
| Lochkerbschlagzähigkeit ($kJ/m^2$) DIN 53 753 | 9.0 | 27.4 |
| Biegefestigkeit ($N/mm^2$) DIN 43 452 | 118.3 | 133.3 |
| Streckspannung ($N/mm^2$) DIN 53 455 | 83.0 | 87.5 |
| Reißfestigkeit ($N/mm^2$) DIN 53 455 | 54 | 31 |
| Reißdehnung (%) DIN 53 455 | 13.8 | 24.4 |
| Elastizitätsmodul ($N/mm^2$) DIN 53 457 | - | 2580 |

Vergleichsbeispiel 2

70 Teile eines Polyarylethersulfons, aufgebaut aus Einheiten, die sich von 4,4'-Dichlordiphenylsulfon und 2,2-Di-(4-hydroxyphenyl) propan ableiten und 30 Teile Polyamid-6,10 wurden in einem Brabender Plasticorder bei einer Temperatur von 300 °C gemischt. Das Mischen wurde bei 45 U/min für eine

Zeitdauer von 10 Minuten in einem 60 $cm^3$ Mischkopf durchgeführt. Die Formmasse wurdenach dem Abkühlen geschnitzelt und bei einer Temperatur von 300 °C zu Formkörpern verpreßt. Die Eigenschaften der Formkörper sind aus folgender Tabelle II zu entnehmen.

Beispiele 2 und 3

Ein Polyarylethersulfon, aufgebaut aus Einheiten, die sich von 4,4'-Dichlordiphenylsulfon und 2,2-Di-(4-hydroxyphenyl) propan ableiten, Polyamid-6,10 und Carboxylgruppen enthaltendes Polyarylethersulfon, aufgebaut aus Einheiten, die sich von 2,2-Di-(hydroxyphenyl) propan, 4,4'-Di-(4-Hydroxyphenyl) valeriansäure und 4,4'-Dichlordiphenylsulfon ableiten mit einer relativen Viskosität von 1,14 (0,5 %, NMP, 25 °C) wurden in einem Brabender Plasticorder vermischt. Die Schmelztemperatur betrug 300 °C. Das Mischen wurde bei 45 U/min. für eine Zeitdauer von 10 Minuten in einem 60 $cm^3$ Mischkopf durchgeführt. Die erhaltene Formmasse wurde nach dem Abkühlen geschnitzelt und bei 300 °C zu Formlingen gepreßt. Die Mischungsverhältnis der Ausgangsstoffe und die Eigenschaften der Formkörper sind aus der nachfolgenden Tabelle II zu entnehmen.

(Siehe Tabelle II Seite 7 f.)

Tabelle II

| | Polyarylethersulfon Gew.-Teile | Polyamid 6 10 Gew.-Teile | Polyarylethersulfon mit -COOH-Gruppen Gew.-Teile | Streckspannung ($N/mm^2$) | Reißfestigkeit ($N/mm^2$) | Reißdehnung (%) |
|---|---|---|---|---|---|---|
| Vergl. Bsp. 2 | 70 | 30 | - | - | 23.1 | 2.2 |
| Beispiel 2 | 60 | 30 | 10 | 60.7 | 54.0 | 9.0 |
| Beispiel 3 | 50 | 30 | 20 | 69.3 | 43.0 | 5.0 |

## Patentansprüche

1. Thermoplastische Formmassen, enthaltend
   A) 5 bis 65 Gew.-% mindestens eines thermoplastischen Polyamids
   B) 1 bis 95 Gew.-% mindestens eines Polyarylethersulfons mit sauren Gruppen, und
   C) 0 bis 94 Gew.-% eines Polyarylethersulfons ohne saure Gruppen,

wobei sich die Summe der Gewichtsprozente A, B und C jeweils zu 100 ergänzen und
   D) gegebenenfalls Hilfsstoffe in wirksamen Mengen.

2. Thermoplastische Formmassen nach Anspruch 1, dadurch gekennzeichnet, daß die Polyarylethersulfone mit sauren Gruppen von 0,01 bis 5 m Äquivalent/g Polymer saure Gruppen enthalten.

3. Thermoplastische Formmassen nach den Ansprüchen 1 und 2, dadurch gekennzeichnet, daß die Polyarylethersulfone mit sauren Gruppen Carboxyl- und/oder Sulfonsäuregruppen enthalten.

4. Thermoplastische Formmassen nach den Ansprüchen 1 bis 3, dadurch gekennzeichnet, daß die Polyarylethersulfone B) und/oder C) aufgebaut sind aus Einheiten, die sich von 4,4'-Dichlordiphenylsulfon und 4,4'-Dihydroxydiphenylsulfon ableiten.

5. Thermoplastische Formmassen nach den Ansprüchen 1 bis 3, dadurch gekennzeichnet, daß die Polyarylethersulfone B) und/oder C) aufgebaut sind aus Einheiten, die sich von 4,4'-Dichlordiphenylsulfon und 2,2-Di-(4-hydroxyphenyl) propan ableiten.

## Claims

1. A thermoplastic molding material containing
   A) from 5 to 65 % by weight of one of more thermoplastic polyamides,
   B) from 1 to 95 % by weight of one or more polyaryl ether sulfones possessing acidic groups and
   C) from 0 to 94 % by weight of a polyaryl ether sulfone without acidic groups,

the sum of the weight percentages A, B and C being 100,
   D) with or without assistants in effective amounts.

2. A thermoplastic molding material as claimed in claim 1, wherein the polyaryl ether sulfones possessing acidic groups contain from 0.01 to 5 milliequivalents of acidic groups per g of polymer.

3. A thermoplastic molding material as claimed in claims 1 and 2, wherein the polyaryl ether sulfones possessing acidic groups contain carboxyl and/or sulfo groups.

4. A thermoplastic molding material as claimed in claim 1 or 2 or 3, wherein the polyaryl ether sulfones B) and/or C) are composed of units which are derived from 4,4'-dichlorodiphenyl sulfone and 4,4'-dihydroxydiphenyl sulfone.

5. A thermoplastic molding material as claimed in claim 1 or 2 or 3, wherein the polyaryl ether sulfones B) and/or C) are composed of units which are derived from 4,4'-dichlorodiphenyl sulfone and 2,2-di-(4-hydroxyphenyl)-propane.

## Revendications

1. Matières à mouler thermoplastiques, contenant
   A) 5 à 65 % en poids d'au moins un polyamide thermoplastique,
   B) 1 à 95 % en poids d'au moins une polyaryléther-sulfone à groupes acides et
   C) 0 à 94 % en poids d'une polyaryléther-sulfone exempte de groupes acides,

la somme des pourcentages de A, B et C étant égale à 100, ainsi qu'éventuellement
   D) des additifs en des proportions efficaces.

2. Matières à mouler thermoplastiques suivant la revendication 1, caractérisées en ce que les polyaryléthersulfones à groupes acides contiennent entre 0,01 et 5 milliéquivalents de groupes acides par g de polymère.

3. Matières à mouler thermoplastiques suivant les revendications 1 et 2, caractérisées en ce que les polyaryléther-sulfones à groupes acides contiennent des groupes carboxyle et(ou) acide sulfonique.

4. Matières à mouler thermoplastiques suivant les revendications 1 à 3, caractérisées en ce que les polyaryléther-sulfones B) et(ou) C) sont à base d'unités dérivées de la 4,4'-dichloro-diphényl-sulfone et de la 4,4'-dihydroxy-diphényl-sulfone.

5. Matières à mouler thermoplastiques suivant les revendications 1 à 3, caractérisées en ce que les polyaryléther-sulfones B) et(ou) C) sont à base d'unités dérivées de la 4,4'-dichloro-diphényl-sulfone et du 2,2-di-(4-hydroxy-phényl)-propane.